# EUROPÄISCHE PATENTSCHRIFT

(11) **EP 1 479 279 B1**
(45) Veröffentlichungstag und Bekanntmachung des Hinweises auf die Patenterteilung: **21.07.2010**
(21) Anmeldenummer: 04010628.8
(22) Anmeldetag: 05.05.2004
(51) Int. Cl.: A01D 41/12

(54) **Spreuverteiler**
Chaff spreader
Distributeur de balle

(30) Priorität: 23.05.2003 DE 10323830
(43) Veröffentlichungstag der Anmeldung: 24.11.2004
(73) Patentinhaber: CLAAS Selbstfahrende Erntemaschinen GmbH, 33428 Harsewinkel (DE)
(72) Erfinder: Kucerin, Sergej, 32602 Vlotho (DE); Buchmann, Markus, 33428 Harsewinkel (DE); Lakenbrink, Sven, 48361 Beelen (DE); Grachtrup, Christian, 33442 Herzebrock-Clarholz (DE)

(56) Entgegenhaltungen:
- EP-A- 0 635 198
- EP-A- 0 958 727
- US-A- 5 433 664

## Beschreibung

Die Erfindung betrifft einen Mähdrescher nach dem Oberbegriff des Anspruchs 1. Aus der EP 0 635 198 A1 ist ein Spreuverteiler bekannt, der im wesentlichen aus zwei in festen Rotorgehäusen angeordneten in entgegengesetzten Drehrichtungen rotierend antreibbaren Verteilscheiben besteht. Die Rotorgehäuse mit den Verteilscheiben sind auf zwei Einzeltraversen gelagert, die über eine Koppeleinrichtung miteinander verbindbar sind. Jede Einzeltraverse ist mittels eines Schwenkbeschlages an eine außenseitige horizontale Achse schwenkbar an einer Seitenwand des Mähdreschers aufgehängt, so dass jede Einzeltraverse in eine horizontale Betriebsstellung und in eine vertikale Wartestellung schwenkbar ist.

Nachteilig bei dieser Ausführung ist, dass die Siebvorrichtung nur schwer von der Rückseite des Mähdreschers erreichbar ist, wenn ein Strohhäcksler im hinteren Bereich installiert ist. Die in Wartestellung befindlichen Einzeltraversen versperren den seitlichen Zugang zur Siebvorrichtung. Es besteht somit nur die Möglichkeit über den Boden kriechend bis zur Siebvorrichtung zu gelangen.

Der Erfindung liegt daher die Aufgabe zugrunde einen Mähdrescher derart weiterzuentwickeln, dass die Siebvorrichtung für die Wartung und Kontrolle sowie zur Verstellung der Siebe von den Seiten bequem zugänglich ist.

Diese Aufgabe wird erfindungsgemäß durch die im Patentanpruch 1 genannten Merkmale gelöst. Weitere vorteilhafte Ausführungen des Erfindungsgegenstandes ergeben sich aus den übrigen Ansprüchen.

Indem das Ärbeitsorgan um eine annähernd vertikale Achse derart verschwenkbar ist, dass das Verschwenken des Arbeitsorgans zumindest teilweise aus dem rückwärtigen Bereich der Siebvorrichtung und in einer annähern horizontalen Ebene erfolgt; wird sichergestellt, dass die Zugänglichkeit zur Siebvorrichtung verbessert und vereinfacht wird.

Bei einem besonders bevorzugtem Ausführungsbeispiel ist die Arbeitsorgananordnung ein Spreuverteiler.

Der Spreuverteiler besteht vorteilhafterweise aus zwei spiegelbildlichen Verteileinrichtungen, so dass sich einfache, kostengünstige Bauteile ergeben.

Die Verteileinrichtungen sind vorteilhafterweise getrennt aus den rückwärtigen Bereichen schwenkbar sind, so dass die Verteileinrichtungen auf engem Raum verschwenkbar sind.

In weiterer Ausgestaltung des Ausführungsbeispiels besteht die Verteileinrichtung im wesentlichen aus einem Rotorgehäuse, einer in dem Rotorgehäuse angeordneten, rotierend angetriebenen Verteilscheibe, einer Quertraverse und einem Schwenkarm, wobei das Rotorgehäuse auf der Quertraverse befestigt ist. Ein solcher Aufbau der Verteileinrichtung ist besonders einfach und wirtschaftlich realisierbar.

Indem die Verteileinrichtung vorteilhafterweise aus einer Betriebsstellung in eine Wartungsstellung und umgekehrt schwenkbar ist, muss sie beispielsweise für Wartungszwecke an der Siebvorrichtung nicht demontiert werden.

Damit die Zuleitungen zu den Antrieben nicht gequetscht, geknickt oder gedehnt werden sind bei einem bevorzugten Ausführungsbeispiel die Verteileinrichtung bis zu einem Anschlag in die Wartungsstellung verschwenkbar.

Indem ein Hinterrad die Funktion des Anschlags übernimmt, ist kein zusätzliches Bauteil als Anschlag nötig. Das Hinterrad weist gleichzeitig beim Anprall die dämpfende Wirkung eines Gummipuffers auf.

In weitere Ausgestaltung dieses Ausführungsbeispieles ist an den oberen Enden des Schwenkarms eine Hülse angeordnet, die auf einer Achse drehbar gelagert ist.

Die Achse ist bei dem bevorzugten Ausführungsbeispiel außen an einer Seitenwand des Mähdreschers befestigt.

Damit das Rotorgehäuse durch die Schwerkraft angetrieben in die Wartungsstellung dreht und in dieser Stellung verbleibt, ist die Achse des erfindungsgemäßen Ausführungsbeispiels in vertikaler Richtung geneigt angeordnet. Diese Anordnung weist weiterhin den Vorteil auf, dass beim Schwenken der Verteileinrichtung nur eine

geringe Handkraft nötig ist, um die Verteileinrichtung aus der Wartungsstellung in die Betriebsstellung zu bewegen.

In weiterer Ausgestaltung dieses Ausführungsbeispieles sind die Quertraverse und der Schwenkarm zusammen aus einem einteiligen, zweifach gebogenem Hohlprofil gefertigt. Diese Gestaltung bedingt ein kostengünstiges umformendes Fertigungsverfahren, zudem weisen die Bauteile keine spitzen Kanten auf, an denen sich der Bediener verletzen kann.

Damit die Verteileinrichtung während des Betriebs nicht selbsttätig aus dem Wirkbereich herausschwenkt, wird der Schwenkarm mit einer Feststellvorrichtung in der Betriebsstellung gehalten.

Um die Verteileinrichtung leichter von Hand in die Stellungen drehen zu können, ist an dem Rotorgehäuse ein Bedienbügel angeordnet. Dieser versperrt in der Betriebsstellung zugleich den Gefahrenbereich zwischen Strohhäcksler und Rotorgehäuse.

Damit die Verteileinrichtung einzeln lageveränderbar ist, ist jede Verteilscheibe vorteilhafterweise über einen Einzelantrieb, vorzugsweise in Form eines Hydromotors angetrieben.

Um das über die Siebvorrichtung überlaufende Korn-Spreu-Gemisch gleichmäßig in die Rotorgehäuse zu fördern, ist zwischen der Siebvorrichtung und der Verteileinrichtung eine Schurre angeordnet.

Weitere vorteilhafte Ausführungen sind Gegenstand weiterer Unteransprüche und werden nachfolgend an Hand eines in mehreren Figuren dargestellten Ausführungsbeispiels beschrieben.

Es zeigt:
Fig.1 einen schematischen Querschnitt durch einen Mähdrescher mit einer erfindungsgemäßen Einrichtung zum Verteilen des Korn-Streu-Gemisches.
Fig.2 einen Schnitt II-II durch die Seitenansicht des rückwärtigen Endes eines Mähdreschers.

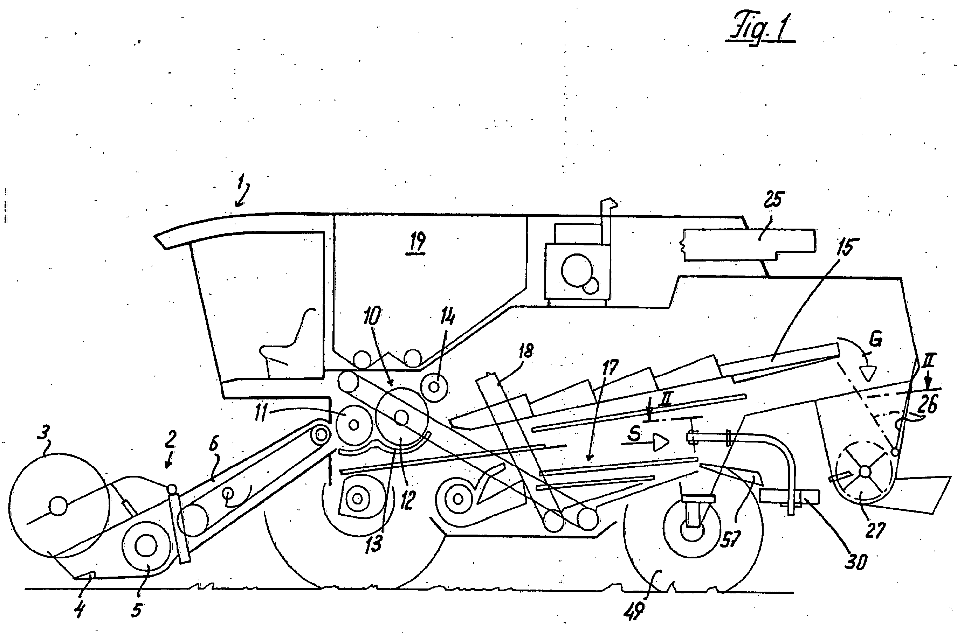

In Fig.1 ist ein schematischer Querschnitt durch einen Mähdrescher 1 dargestellt. Die Arbeitsweise bzw. der Gutfluß durch die Maschine ist wie folgt:

Das Erntegut wird zunächst mittels einer Haspel 3 des Schneidwerks 2 dem Schneidtisch zugeführt und von einem Messerbalken 4 abgeschnitten. Das abgeschnittene Erntegut wird dann über eine Einzugsschnecke 5 und einen Einzugskanal 6 zum Eingang einer Drescheinrichtung 10 des Dresch-/ Separatorsystems geführt. Am Eingang der Dreschvorrichtung 10 befinden sich ein Beschleuniger 11 und in Gutflussrichtung nachgeschaltet eine Dreschtrommel 12. Unterhalb der Dreschtrommel 12 ist ein passend geformter Dreschkorb 13 angeordnet. Das vom Einzugskanal 6 kommende Erntegut wird durch den Beschleuniger 11 erfasst und dann weiter durch den zwischen der Dreschtrommel 12 und dem Dreschkorb 13 befindlichen Dreschspalt gefördert, dabei wird das Erntegut durch an der Dreschtrommel 13 angeordnete Dreschleisten gedroschen, d.h. geschlagen und zerrieben, wobei ein Korn-Spreu-Gemisch K durch den siebartigen Dreschkorb 13 fällt und einer an sich bekannten und deshalb hier nicht näher beschriebenen Siebvorrichtung 17 zugeführt wird, um die Körner von den Beimengungen, d.h. von Halmteilen und Spreuteilen zu trennen.

Der am hinteren Ende der Drescheinrichtung 10 aus dem Spalt austretende gedroschene Gutstrom G wird über eine Wendetrommel 14 auf den Hordenschüttler 15 geleitet, auf dem die noch im Gutstrom G befindlichen Körner sowie evtl. Kurzstroh und Spreu abgetrennt werden. Die Körner, das Kurzstroh und die Spreu werden ebenfalls in die Siebvorrichtung 17 gefördert.

In der Siebvorrichtung 17 werden die Körner vom Kurzstroh bzw. von der Spreu getrennt, die dann über einen Elevator 18 nach oben in einen Korntank 19 gefördert werden. Der Inhalt des Korntanks 19 kann bei Bedarf mit einem Tankentleerförderer 25 auf einen Transportwagen umgeladen werden.

Das über die Hordenschüttler 15 bewegte Stroh sowie ein kleiner Anteil an Verlustkörnern wird je nach Position eines verstellbaren Strohleitblechs 26 am hinteren Ende des Mähdreschers 1 entweder im Schwad auf dem Feld abgelegt oder es wird in einen Strohhäcksler 27 gefördert, der das Stroh zunächst zerkleinert und anschließend gleichmäßig auf dem Feld verteilt. Beim Häckseln befindet sich der Strohhäcksler 27 in einer Betriebsstellung und wird angetrieben, das Strohleitblech 26 steht in einer Position, bei der Stroh zum Strohhäcksler 27 gelangen kann. Wird das Stroh im Schwad abgelegt, nimmt der Strohhäcksler 27 eine Ruhestellung ein und wird nicht angetrieben. Das Strohleitblech steht in einer zweiten Position, bei der das Stroh über das Strohleitblech 26 rutscht und über Schwadformer geführt auf dem Feld abgelegt wird.

Der über die Siebvorrichtung 17 überlaufende Siebkastenabgang S gelangt über eine Schurre 29 in einen Spreuverteiler 30, der zwischen den Hinterrädern 49, 49' und dem Strohhäcksler 27 angeordnet ist. Der Siebkastenabgang S wird mit dem Spreuverteiler 30 gleichmäßig auf dem Feld verteilt.

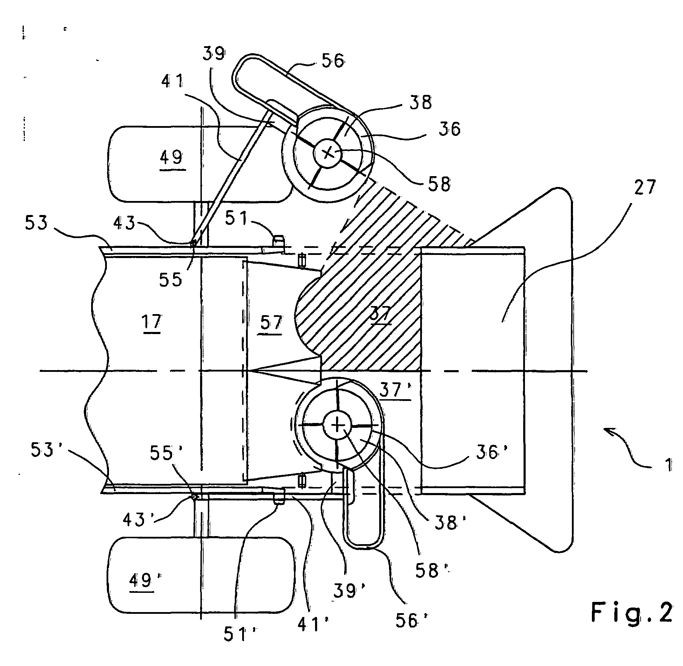

Die weitere Beschreibung des Ausführungsbeispiels erfolgt anhand der Fig.2, die einen in Fig.1 gekennzeichneten Schnitt 11-11 darstellt.

Die symmetrisch aufgebaute Spreuverteiler 30 besteht aus zwei spiegelbildlich ausgeführten Verteileinrichtungen 33, 33', die aus je einem Rotorgehäuse 36, 36', in denen eine nicht näher erläuterte Verteilscheibe 38, 38' drehbar gelagert ist, aufgebaut sind. Beide Rotorgehäuse 36, 36' sind auf jeweils einer horizontalen Quertraverse 39, 39' befestigt, die über einen Schwenkarm 41, 41' um eine Achse 43, 43' drehbar ist. Beide Rotorgehäuse 36, 36' sind von einer Wartungsstellung 46, 46' in eine Betriebsstellung 44, 44' drehbar und umgekehrt.

Das linke Rotorgehäuse 36 ist in Fig.2 in der Betriebsstellung 44, und das rechte Rotorgehäuse 36' ist in der Wartungstellung 46' dargestellt. In der Wartungsstellung 46' geben das Rotorgehäuse 36' und der Schwenkarm 41' einen von der Seite des Mähdreschers 1 her betretbaren, rückwärtigen Bereich 37' der Siebvorrichtung 17 frei, der die Zugänglichkeit zur Siebvorrichtung 17 erleichtert, um sie beispielsweise zu reinigen oder auf eventuelle Schäden zu prüfen und gegebenenfalls auszutauschen. Das Rotorgehäuse 36' lehnt in der Wartungsstellung 46' an einem Hinterrad 49' des Mähdreschers 1, das die Funktion eines Anschlags übernimmt.

Das in der Betriebsstellung 44 stehende Rotorgehäuse 36 wird mit Hilfe einer Feststellvorrichtung 51 gehalten, die den Schwenkarm 41 arretiert. Die

Feststellvorrichtung 51 ist an der Außenseite einer Seitenwand 53 des Mähdreschers 1 befestigt ist. An der gegenüberliegenden Seitenwand 53' ist entsprechend eine Feststellvorrichtung 51' für das Rotorgehäuse 36' vorgesehen.

Die Quertraverse 39, 39' und der Schwenkarm 41, 41' sind zusammen aus einem einstückigen, zweifach gebogenen Rechteck-Hohlprofil hergestellt. Am oberen Ende des Schwenkarmes 41, 41' ist eine Hülse 55, 55' angeordnet, die drehbar auf der annähernd vertikalen Achse 43, 43' an der Außenseite der Seitenwand 53, 53' des Mähdreschers 1 aufgehängt ist. Die Neigung der Achse 43, 43' ist so gewählt, dass das Rotorgehäuse 36, 36' durch die Schwerkraft selbsttätig aus der Betriebsstellung 44, 44' in die Wartungsstellung 46, 46' dreht, nachdem die Feststellvorichtung 51, 51' gelöst wird und in dieser Stellung an das Hinterrad 49, 49' anschlägt.

An dem Rotorgehäuse 36, 36' ist ein Bedienhebel 56, 56' angebracht, der über die Breite des Strohhäckslers 27 hinausragt, so dass der Bediener das Rotorgehäuse 36, 36' zum Drehen sicher und bequem greifen kann. Gleichzeitig sperrt der Bedienhebel 56, 56' in der Betriebsstellung 44, 44' den Gefahrenbereich zwischen Rotorgehäuse 36, 36' und Strohhäcksler 27 ab.

Zwischen der Siebvorrichtung 17 und den Rotorgehäusen 36, 36' ist eine Schurre 29 mit einem Stromteiler angeordnet, die das von der Siebvorrichtung 17 separierte Korn-Spreu-Gemisch gleichmäßig in die Rotorgehäuse 36, 36' verteilt.

Die Verteilscheiben 38, 38' im Rotorgehäuse 36, 36' werden über einen Hydromotor 58, 58' angetrieben. Die rotierenden Verteilscheiben 38, 38' verteilen das Korn-Spreu-Gemisch gleichmäßig über die gesamte Schnittbreite des Mähdreschers 1.

### Bezugszeichenliste:

- 1: Mähdrescher
- 2: Schneidwerk
- 3: Haspel
- 4: Messerbalken
- 5: Einzugsschnecke
- 6: Einzugskanal
- 10: Drescheinrichtung
- 11: Beschleuniger
- 12: Dreschtrommel
- 13: Dreschkorb
- 14: Wendetrommel
- 15: Hordenschüttler
- 17: Siebvorrichtung
- 18: Elevator
- 19: Korntank
- 25: Tankentleerförderer
- 26: Strohleitblech
- 27: Strohhäcksler

- 30: Spreuverteiler
- 31/31': Verteileinrichtungen
- 36/36': Rotorgehäuse
- 37/37': rückwärtiger Bereich
- 38/38': Verteilerscheibe
- 39/39': Quertraverse
- 41/41': Schwenkarm
- 43/43': Achse
- 44/44': Betriebsstellung
- 46/46': Wartungsstellung
- 49/49': Hinterrad

- 51/51': Feststellvorrichtung
- 53/53': Seitenwand
- 55/55': Hülse
- 56/56': Bedienhebel
- 57: Schurre
- 58/58': Hydromotor
- S: Siebkastenabgang
- G: Gutstrom

## Patentansprüche

1. Mähdrescher (1) mit mindestens einem im rückwärtigen Bereich (37, 37') einer Siebvorrichtung (17) angeordneten Arbeitsorgan,
**dadurch gekennzeichnet,**
**dass** das wenigstens eine Arbeitsorgan um eine annähernd vertikale Achse (43, 43') verschwenkbar ist, derart dass das Verschwenken des Arbeitsorgans zumindest teilweise aus dem rückwärtigen Bereich (37, 37') der Siebvorrichtung (17) heraus und in einer annähernd horizontalen Ebene erfolgt.

2. Mähdrescher (1) nach Anspruch 1,
**dadurch gekennzeichnet,**
**dass** das Arbeitsorgan ein Spreuverteiler (30) ist.

3. Mähdrescher (1) nach wenigstens einem der vorhergehenden Ansprüche,
**dadurch gekennzeichnet,**
**das** der Spreuverteiler (30) aus zwei spiegelbildlichen Verteileinrichtungen (31, 31') besteht.

4. Mähdrescher (1) nach wenigstens einem der vorhergehenden Ansprüche,
**dadurch gekennzeichnet,**
**das** die Verteileinrichtungen (31, 31') getrennt aus den rückwärtigen Bereichen (37, 37') schwenkbar sind.

5. Mähdrescher (1) nach wenigstens einem der vorhergehenden Ansprüche,
**dadurch gekennzeichnet,**
**dass** die Verteileinrichtung (31, 31') im wesentlichen aus einem Rotorgehäuse (36, 36'), einer in dem Rotorgehäuse (36, 36') angeordneten, rotierend angetriebenen Verteilscheibe (38, 38'), einer Quertraverse (39, 39') und einem Schwenkarm (41, 41') besteht, wobei das Rotorgehäuse (36, 36') auf der Quertraverse (39, 39') befestigt ist.

6. Mähdrescher (1) nach wenigstens einem der vorhergehenden Ansprüche,
**dadurch gekennzeichnet,**
**dass** die Verteileinrichtung (31, 31') aus einer Betriebsstellung (44, 44') in eine Wartungsstellung (46, 46') und umgekehrt verschwenkbar ist.

7. Mähdrescher (1) nach wenigstens einem der vorhergehenden Ansprüche
**dadurch gekennzeichnet,**
**dass** die Verteileinrichtung (31, 31') bis zu einem Anschlag in die Wartungsstellung (46, 46') verschwenkbar ist.

8. Mähdrescher (1) nach wenigstens einem der vorhergehenden Ansprüche
**dadurch gekennzeichnet,**
**dass** der Anschlag ein Hinterrad (49, 49') ist.

9. Mähdrescher (1) nach wenigstens einem der vorhergehenden Ansprüche
**dadurch gekennzeichnet, dass** am oberen Ende des Schwenkarms (41, 41') eine Hülse (55, 55') angeordnet ist, wobei die Hülse (55, 55) drehbar auf der Achse (43, 43') gelagert ist.

10. Mähdrescher (1) nach wenigstens einem der vorhergehenden Ansprüche
**dadurch gekennzeichnet, dass**
die Achse (43, 43') außen an einer Seitenwand (53, 53') des Mähdreschers (1) befestigt ist.

11. Mähdrescher (1) nach wenigstens einem der vorhergehenden Ansprüche
**dadurch gekennzeichnet, dass**
die Achse (43, 43') in vertikaler Richtung geneigt angeordnet ist.

12. Mähdrescher (1) nach wenigstens einem der vorhergehenden Ansprüche
**dadurch gekennzeichnet, dass**
die Quertraverse (39, 39') und der Schwenkarm (41, 41') zusammen aus einem einteiligen, zweifach gebogenem Hohlprofil gefertigt sind.

13. Mähdrescher (1) nach wenigstens einem der vorhergehenden Ansprüche
**dadurch gekennzeichnet,**
**das** der Schwenkarm (41, 41') mit einer Feststellvorrichtung (51, 51') in der Betriebsstellung (44, 44') gehalten wird.

14. Mähdrescher (1) nach wenigstens einem der vorhergehenden Ansprüche
**dadurch gekennzeichnet,**
**dass** an dem Rotorgehäuse (36, 36') ein Bedienhebel (56, 56') angeordnet ist.

15. Mähdrescher (1) nach wenigstens einem der vorhergehenden Ansprüche
**dadurch gekennzeichnet,**
**dass** jede Verteilscheibe (38, 38') über einen Einzelantrieb, vorzugsweise in Form eines Hydromotors (58, 58') angetrieben ist.

16. Mähdrescher (1) nach wenigstens einem der vorhergehenden Ansprüche
**dadurch gekennzeichnet,**
**das** zwischen der Siebvorrichtung (17) und der Verteileinrichtung (31, 31') eine Schurre (57) angeordnet ist.

## Claims

1. A combine harvester (1) comprising at least one working member arranged in the rearward region (37, 37') of a sieve device (17),
**characterised in that** the at least one working member is pivotable about an approximately vertical axis (43, 43') in such a way that the pivotal movement of the working member is effected at least partially out of the rearward region (37, 37') of the sieve device (17) and in an approximately horizontal plane.

2. A combine harvester (1) according to claim 1 **characterised in that** the working member is a chaff distributor (30).

3. A combine harvester (1) according to at least one of the preceding claims **characterised in that** the chaff distributor (30) comprises two mirror-image distribution devices (31, 31').

4. A combine harvester (1) according to at least one of the preceding claims **characterised in that** the distribution devices (31, 31') are pivotable separately out of the rearward regions (37, 37').

5. A combine harvester (1) according to at least one of the preceding claims **characterised in that** the distribution device (31, 31') substantially comprises a rotor housing (36, 36'), a rotatingly driven distribution disc (38, 38') arranged in the rotor housing (36, 36'), a transverse traverse member (39, 39') and a pivot arm (41, 41'), wherein the rotor housing (36, 36') is fixed on the transverse traverse member (39, 39').

6. A combine harvester (1) according to at least one of the preceding claims **characterised in that** the distribution device (31, 31') is pivotable from an operative position (44, 44') into a maintenance position (46, 46') and vice-versa.

7. A combine harvester (1) according to at least one of the preceding claims **characterised in that** the distribution device (31, 31') is pivotable into the maintenance position (46, 46') as far as an abutment.

8. A combine harvester (1) according to at least one of the preceding claims **characterised in that** the abutment is a rear wheel (49, 49').

9. A combine harvester (1) according to at least one of the preceding claims **characterised in that** arranged at the upper end of the pivot arm (41, 41') is a sleeve (55, 5'), the sleeve (55, 55') being mounted rotatably on the axis (43, 43').

10. A combine harvester (1) according to at least one of the preceding claims **characterised in that** the axis (43, 43') is externally fixed to a side wall (53, 53') of the combine harvester (1).

11. A combine harvester (1) according to at least one of the preceding claims **characterised in that** the axis (43, 43') is arranged inclined in a vertical direction.

12. A combine harvester (1) according to at least one of the preceding claims **characterised in that** the transverse traverse member (39, 39') and the pivot arm (41, 41') are together made from a one-piece, doubly bent hollow profile.

13. A combine harvester (1) according to at least one of the preceding claims **characterised in that** the pivot arm (41, 41') is held in the operative position (44, 44') by means of a locking device (51, 51').

14. A combine harvester (1) according to at least one of the preceding claims **characterised in that** an operating lever (56, 56') is arranged at the rotor housing (36, 36').

15. A combine harvester (1) according to at least one of the preceding claims **characterised in that** each distribution disc (38, 38') is driven by way of an individual drive, preferably in the form of a hydraulic motor (58, 58').

16. A combine harvester (1) according to at least one of the preceding claims **characterised in that** a chute (57) is arranged between the sieve device (17) and the distribution device (31, 31').

## Revendications

1. Moissonneuse-batteuse (1) comprenant au moins un organe de travail disposé dans la zone arrière (37, 37") d'un dispositif de tamisage (17), **caractérisée en ce que** l'organe de travail au nombre d'au moins un est apte à pivoter autour d'un axe sensiblement vertical (43, 43'), de sorte que le pivotement de l'organe de travail s'effectue au moins partiellement hors de la zone arrière (37, 37') du dispositif de tamisage (17) et dans un plan sensiblement horizontal.

2. Moissonneuse-batteuse (1) selon la revendication 1, **caractérisée en ce que** l'organe de travail est un éparpilleur de balle (30).

3. Moissonneuse-batteuse (1) selon au moins une des revendications précédentes, **caractérisée en ce que** l'éparpilleur de balle (30) se compose de deux dispositifs d'éparpillage à symétrie en miroir (31, 31").

4. Moissonneuse-batteuse (1) selon au moins une des revendications précédentes, **caractérisée en ce que** les dispositifs d'éparpillage (31, 31') peuvent pivoter séparément hors des zones arrière (37, 37').

5. Moissonneuse-batteuse (1) selon au moins une des revendications précédentes, **caractérisée en ce que** le dispositif d'éparpillage (31, 31') se compose pour l'essentiel d'un carter de rotor (36, 36'), d'un disque d'éparpillage (38, 38') disposé dans le carter de rotor (36, 36') et entraîné en rotation, d'une traverse (39, 39') et d'un bras pivotant (41, 41'), le carter de rotor (36, 36') étant fixé à la traverse (39, 39').

6. Moissonneuse-batteuse (1) selon au moins une des revendications précédentes, **caractérisée en ce que** le dispositif d'éparpillage (31, 31') peut pivoter d'une position de travail (44, 44') vers une position d'attente (46, 46') et inversement.

7. Moissonneuse-batteuse (1) selon au moins une des revendications précédentes, **caractérisée en ce que** le dispositif d'éparpillage (31, 31') peut pivoter en position d'attente (46, 46') jusqu'à une butée.

8. Moissonneuse-batteuse (1) selon au moins une des revendications précédentes, **caractérisée en ce que** la butée est une roue arrière (49, 49').

9. Moissonneuse-batteuse (1) selon au moins une des revendications précédentes, **caractérisée en ce qu'**à l'extrémité supérieure du bras pivotant (41, 41') est disposé un manchon (55, 55'), le manchon (55, 55') étant monté pivotant sur l'axe (43, 43').

10. Moissonneuse-batteuse (1) selon au moins une des revendications précédentes, **caractérisée en ce que** l'axe (43, 43') est fixé extérieurement à une paroi latérale (53, 53') de la moissonneuse-batteuse (1).

11. Moissonneuse-batteuse (1) selon au moins une des revendications précédentes, **caractérisée en ce que** l'axe (43, 43') est disposé de manière inclinée dans le sens vertical.

12. Moissonneuse-batteuse (1) selon au moins une des revendications précédentes, **caractérisée en ce que** la traverse (39, 39') et le bras pivotant (41, 41') sont réalisés ensemble à partir d'un profilé creux d'un seul tenant, plié deux fois.

13. Moissonneuse-batteuse (1) selon au moins une des revendications précédentes, **caractérisée en ce que** le bras pivotant (41, 41') est retenu en position de travail (44, 44') par l'intermédiaire d'un dispositif de blocage (51, 51').

14. Moissonneuse-batteuse (1) selon au moins une des revendications précédentes, **caractérisée en ce que** sur le carter de rotor (36, 36') est disposé un levier de manoeuvre (56, 56').

15. Moissonneuse-batteuse (1) selon au moins une des revendications précédentes, **caractérisée en ce que** chaque disque d'éparpillage (38, 38') est entraîné par l'intermédiaire d'un moyen d'entraînement individuel, de préférence en forme de moteur hydraulique (58, 58').

16. Moissonneuse-batteuse (1) selon au moins une des revendications précédentes, **caractérisée en ce qu'**entre le dispositif de tamisage (17) et le dispositif d'éparpillage (31, 31') est disposée une goulotte (57).
